# EUROPEAN PATENT SPECIFICATION

(11) **EP 1 883 292 B1**
(45) Date of publication and mention of the grant of the patent: **09.09.2009**
(21) Application number: 06741462.3
(22) Date of filing: 09.05.2006
(51) Int. Cl.: A01K 5/00, A01K 5/02, B01F 15/02, B01F 7/00

(54) **LIVESTOCK FEED MIXING AND DISTRIBUTING APPARATUS**
VORRICHTUNG ZUM MISCHEN UND VERTEILEN VON VIEHFUTTER
APPAREIL DE MÉLANGE ET DE DISTRIBUTION D'ALIMENTS POUR BÉTAIL

(30) Priority: 10.05.2005 CA 2506870
(43) Date of publication of application: 06.02.2008
(73) Proprietor: Rousseau, Victor, J0G 1N0 Sainte-Monique, Québec (CA)
(72) Inventor: Rousseau, Victor, J0G 1N0 Sainte-Monique, Québec (CA)
(74) Representative: Klooster, Jan Hanri
(86) International application number: PCT/CA2006/000746
(87) International publication number: WO 2006/119626

(56) References cited:
- WO-A-94/19932
- US-A- 5 069 165
- US-A- 5 069 165
- US-A- 6 029 919

## Description

### TECHNICAL FIELD

The present invention relates to a livestock feed mixing and distributing apparatus capable of controllably discharging a mixture of long and short hay strands with supplement feed products.

### BACKGROUND ART

Reference is made to my earlier U.S. Patent 5,069,165 which describes a livestock feeding device which is comprised of a main compartment and a plurality of feed.stock compartments. A conveyor is located at the bottom of the main compartment and conveys a main feed product, herein hay, to a pair of rotary shredders which then discharge the hay on top of a screw conveyor. Closer to the base of the screw conveyor predetermined quantities of feed supplement is discharged in the screw conveyor. A similar feeding device is known from WO-94/19932.

We have found that this type of structure has certain problems when operating with certain feed stocks wherein the fibers are relatively long and contain humidity or if water is added to the mixture. The device does not result in a proper admixture of the main feedstock with the feed supplements and they are discharged often separated from one another. Accordingly, the animal will have a tendency to eat only that feedstock which it likes the most and be less productive to the farmer.

Another disadvantage of this type of aging equipment is that the threshers and the discharge screw conveyor will often jam when the hay fibers are long and particularly humid. Also, with the present arrangement, the hay in the main compartment has a tendency to compact towards the bottom end of the container where the conveyor is located and this heavy compacted and often moist hay is what results in the jamming of the threshers and screw conveyor.

### SUMMARY OF INVENTION

It is therefore a feature of the present invention to provide a livestock feed mixing and distributing apparatus which substantially overcomes the above-mentioned disadvantages of the prior art.

According to the above feature, from a broad aspect, the present invention according to claim 1 provides a livestock feed mixing and distributing apparatus which comprises a mixing drum having a circular flat wall and opposed flat vertical walls. A loading opening is provided in a top end section of the mixing drum. A drive shaft is supported between the opposed flat vertical walls on a center axis of the circular flat wall. Rotational drive means is coupled to the drive shaft. A mixing blade support beam is secured to the drive shaft and extends along a diametrical axis of the circular flat wall and projects on opposed sides of the drive shaft. A mixing blade assembly is secured at opposed free ends of the support beam adjacent the circular flat wall. The circular flat wall has an adjustable and displaceable discharge wall section located above discharge conveying means to controllably discharge a main feed product on the conveying means by the rotational displacement of the mixing blade assembly. Two or more storage compartments are provided for storing feed supplements with each of the compartments having discharge means to feed selected ones of the feed supplements from above the discharge conveying means for admixture with the main feed product.

### BRIEF DESCRIPTION OF DRAWINGS

A preferred embodiment of the present invention will now be described with reference to the accompanying drawings in which:
FIG. 1 is a perspective fragmented view illustrating the construction of the livestock feed mixing and distributing apparatus of the present invention;
FIG. 2 is a top view thereof;
FIG. 3A is a side view of the discharge conveyor with the discharge door shown in a closed position;
FIG. 3B is a view similar to Figure 3A but showing the discharge door in an open position; and
FIG. 4 is a fragmented sectional side view showing the construction of the safety gate secured adjacent the loading opening in the top end section of the mixing drum.

### DESCRIPTION OF PREFERRED EMBODIMENTS

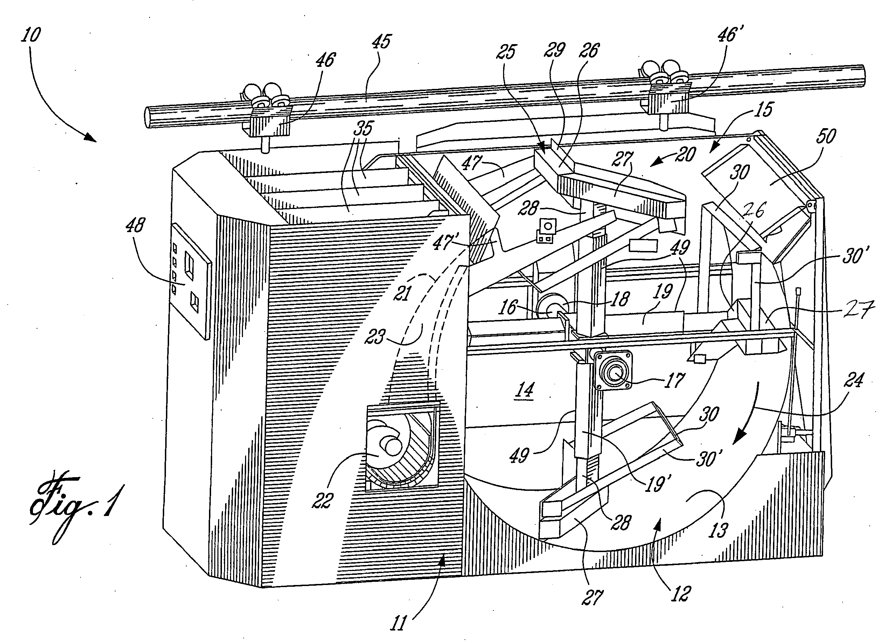

Referring now to the drawings and more particularly to Figure 1, there is shown generally at 10 the livestock feed mixing and distributing apparatus of the present invention. It comprises a main housing assembly 11 in which there is located a mixing drum 12 which is defined by a circular flat contour wall 13 and opposed flat vertical walls 14, only one being shown herein. A loading opening 15 is provided in a top end section of the mixing drum 12. A drive shaft 16 is supported between the opposed flat vertical walls 14 and disposed on the center axis 17 of the circular flat wall 13.

Rotational drive means in the form of a pulley 18 secured to a drive motor (not shown) is coupled to the drive shaft 16. A mixing blade support beam 19 is secured to the drive shaft and extends along a diametrical axis of the circular flat wall and projects on opposed sides of the drive shaft 16. As hereinshown there are two support beams 19 and 19' secured to the drive shaft 16 and extend at right angles to one another. Each of these support beams are provided with a mixing blade assembly 20 secured at opposed free ends of the support beams adjacent the circular flat wall 13.

An adjustable and displaceable discharge door 21 is formed in the circular flat wall 13 and is located above a discharge conveying means and as hereinshown in the form of a screw conveyor 22. Of course, a belt conveyor may also be provided to effect the discharge of the feedstock. By controlling the opening 23 of the door 21, the quantity of a main feed product is discharged from the mixing drum 12 onto the discharge screw conveyor 22. The door 21 is provided with door levers 47 operated by levers 47' which are displaceable against a gradient (not shown) to indicate to the operator the size of the opening 23 provided by the displacement of the door. Of course, the door could also be automatically controlled by motors, as is well known to a person skilled in the art. It is pointed out that the mixing blade assembly is rotated in a clockwise direction as indicated by arrow 24. Accordingly, the feed mixture entering the door is projected upwardly, thus separating and aerating the fibers which fall onto the screw conveyor 22.

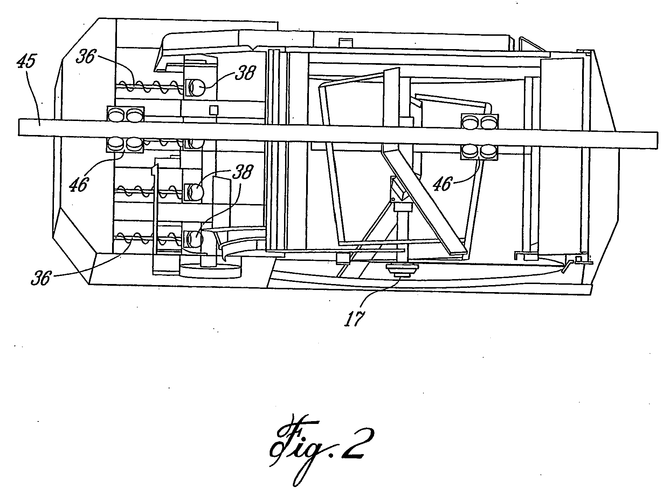

With further reference now to Figure 2, it can be seen that the mixing blade assembly comprises a scraper blade 25 having a straight blade section 26 and a forwardly angled blade section 27, each disposed on a respective side of the free ends 28 of the support beam and on a respective side thereof. The support beam is secured at mid-length of the shaft 16. Accordingly, the angled blade has a tendency of pushing the main feed product, herein hay, against the straight blade section 26 which is transversely oriented to the beam and against the inner side wall 14. This arrangement of the mixing blade assembly is secured to the beam 19'. With respect to the other beam 19, the scraper blade is oriented in the opposed direction. The scraper blades are provided with a rubber scraper 29 which, as hereinshown, is in contact with the circular flat wall 13. These support beams are also telescopic, as hereinshown, and therefore adjustable in length whereby to position the scraper blade at a desired position with respect to the circular flat wall 13.

As also hereinshown, the mixing blade assembly comprises a mixing arm 30 which projects rearwardly of the scraper blade and spaced a predetermined distance from the circular flat wall to mix and prevent compaction of the main feed product within the drum. The main feed product as herein used is hay which is provided with long and short fibers. Accordingly, it is important to provide a good mixture thereof and prevent compaction for the feedstock being discharged and to prevent malfunction of the discharge conveyor or the mixing blade assembly.

As shown in Figure 1, it can be seen that the beams 19 and 19' have a rectangular cross-section but are oriented at an angle of 45° such that the apex 49 thereof faces the direction of displacement of the beams to assist in the mixing of the main feed product. Also, the mixing arm 30 is spaced behind the scraper blades 25 a predetermined distance and are provided with opposed connecting arms 30' secured to the scraper blade. Accordingly, with this arrangement, there is intense mixing of the main feed product, herein hay, which is disposed within the drum and the discharge of the hay is controlled by the displaceable discharge door 21.

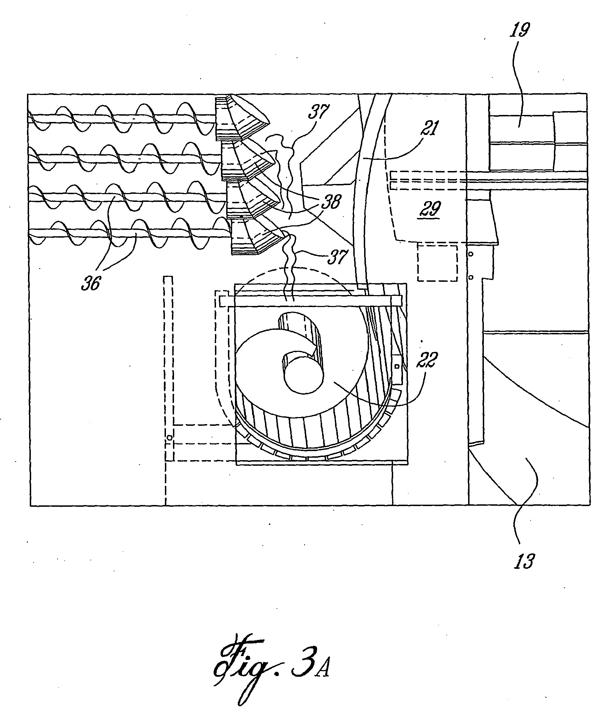

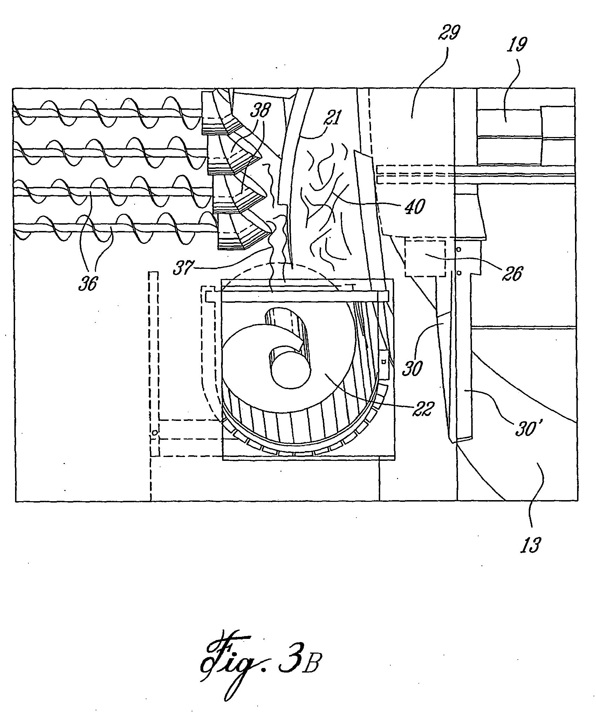

Referring now to Figures 3A and 3B, there is illustrated another section of the main housing 11 and which contains two or more, herein four, storage compartments 35 for storing different feed supplements to be added in admixture with the hay discharged over the discharge screw conveyor. As hereinshown, the bottoms of these storage compartments 35 are elevated and provided with discharge screw conveyors 36 to feed selected ones of the feed supplements 37 over the discharge screw conveyor 22. Upwardly angled discharge tubes 38 provide for the feed supplement 37 to be discharged from above and to fall by gravity and mix with the hay discharged onto the screw conveyor. As shown in Figure 3B, the discharge door 21 is in its fully opened position with the hay 40 being discharged in an upward motion by the scraper blades to provide proper mixing with the feed supplement 37. Although not shown, the livestock feed mixing and distributing apparatus of the present invention may be computer-controlled whereby a proper quantity and a proper mix of the main feed product 40 with the supplement product 37 is discharged to suit the need of each animal in the livestock. The housing 11 is also provided with a control panel 48 to program its operation. The computer associated with the device will estimate when there is a need to load feedstock or feed supplement into the apparatus depending on the programmed dispensed quantities.

Figure 1 shows a displaceable arrangement wherein the apparatus 10 is supported on a support rail 45 by a pair of carriages 46 and 46' and this carriage may have drive wheels and sensors therein to sense the position of the apparatus along the support rail. Several of these positions are magnetically or electrically identified and are associated with each animal of the livestock to be fed thereby providing an identification to the apparatus of its location and the specific animal located in front of the discharge conveyor. Of course, the apparatus may also be supported on a concrete floor surface in which there is embedded induction wires to provide for the displacement of the apparatus therealong and its exact position whereby to identify the animals located adjacent thereto. In such an arrangement, the apparatus would be supported on wheels and a computer would be used to operate the machine.

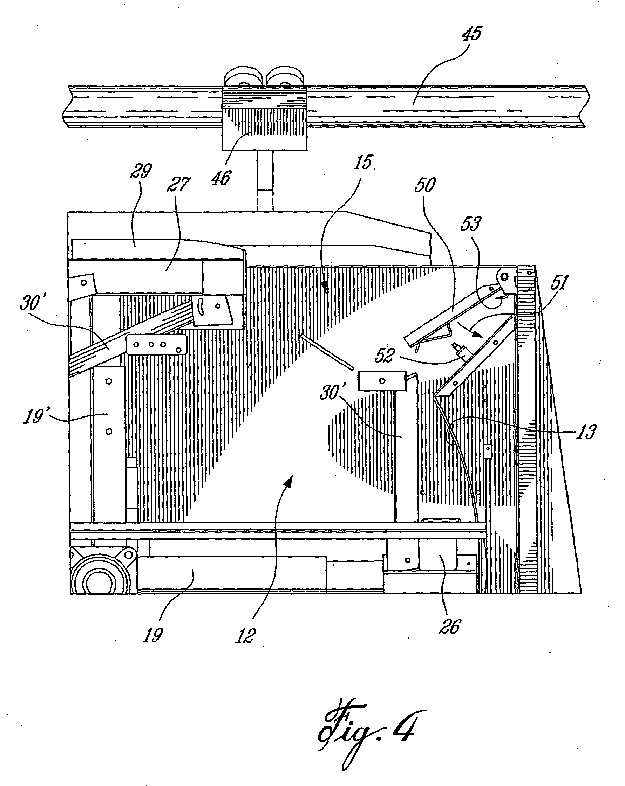

Referring now to Figure 4, there is shown another feature of the apparatus of the present invention in that a safety sensor gate 50 is secured adjacent the loading opening 15 to sense any exceeding weight thereon, such as an overload of the main feed product placed in the mixing drum 12 or any other exceeding load placed on the sensor gate 50 whereby to disable the rotational drive when the gate is hinged downwards in the direction of arrow 51 and against a sensor switch 52. As hereinshown the gate 50 is spring-loaded by a spring assembly 53. This safety feature prevents the drum to be overloaded to cause malfunction and also provides a safety feature to the operators whereby the rotating mixing blade assembly can be stopped if a person was to place his hand onto the sensor gate.

It is within the ambit of the present invention to cover any obvious modifications of the preferred embodiment described herein provide such modifications fall within the scope of the appended claims.

## Claims

1. A livestock feed mixing and distributing apparatus (10) comprising a mixing drum (12) having a circular flat wall (13) and opposed flat vertical walls (14), a loading opening (15) in a top end section of said mixing drum, a drive shaft (16) supported between said opposed flat vertical walls on a center axis (17) of said circular flat wall, rotational drive means (18) coupled to said drive shaft, a mixing blade support beam (19, 19') secured to said drive shaft and extending along a diametrical axis of said circular flat wall and projecting on opposed sides of said drive shaft (16), a mixing blade assembly (20) secured at opposed free ends of said support beam adjacent said circular flat wall (13), said circular flat wall having an adjustable and displaceable discharge door (21) located above discharge conveying means (22) to controllably discharge the quantity of a main feed product (40) on said conveying means (22) by the rotational displacement of said mixing blade assembly (20), said mixing blade assembly (20) comprising a scraper blade (25) having a straight blade section (26) and a forwardly angled blade section (27), each disposed on a respective side of the free end of the support beam (19), **characterized in that** a mixing arm (30) projects rearwardly of said scraper blade and spaced a predetermined distance from said circular flat wall (13) to mix and prevent compaction of said main feed product, said mixing and distributing apparatus comprising two or more storage compartments (35) for storing feed supplements with each said compartment (35) having discharge means (36) to feed selected ones of said feed supplements from above said discharge conveying means for admixture with said main feed product (40).

2. A livestock feed mixing and distributing apparatus as claimed in claim 1 wherein said main feed product (40) is hay having long and short fibers.

3. A livestock feed mixing and distributing apparatus as claimed in claim 1 wherein there are two of said support beams (19, 19') secured to said drive shaft (16) and extending at right angles to one another.

4. A livestock feed mixing and distributing apparatus as claimed in claim 1 wherein there is further provided a safety sensor gate (50) secured adjacent said loading opening (15) to sense the weight of said main feed product (40) loaded in said mixing drum or any exceeding load placed thereon and to disable said rotational drive means (18) when displaced a predetermined distance.

5. A livestock feed mixing and distributing apparatus as claimed in claim 3 wherein said scraper blade (25) is an adjustable blade secured to a blade support frame, said mixing arm (30) having connecting means (30') secured to said scraper blade.

6. A livestock feed mixing and distributing apparatus as claimed in claim 1 wherein said apparatus is mounted on displaceable support means (46, 46') for displacing same adjacent feed areas of livestock stalls.

7. A livestock feed mixing and distributing apparatus as claimed in claim 3 wherein said support beams (19, 19') are adjustable beams to vary the length thereof to position said mixing blade assembly (20) at a desired spacing from said circular flat wall (13), said beams having a rectangular cross-section and oriented at an angle of 45° such that an apex (49) of a corner of said beam (19, 19') faces the direction of displacement thereof to assist in mixing said main feed product.

## Patentansprüche

1. Nutztierfuttermisch- und Nutztierfutterverteilungsvorrichtung (10), umfassend eine Mischtrommel (12), welche eine kreisrunde ebene Wand (13) und einander gegenüberliegende ebene vertikale Wände (14) aufweist, eine Ladeöffnung (15) in einem oberen Abschnitt der Mischtrommel, eine Antriebswelle (16), welche zwischen den gegenüberliegenden ebenen vertikalen Wänden auf einer Mittelachse (17) der kreisrunden ebenen Wand gestützt wird, Rotationsantriebsmittel (18), welche mit der Antriebswelle gekuppelt sind, einen Mischschaufelstützträger (19, 19'), welcher an der Antriebswelle befestigt ist und sich entlang einer Diametralachse der kreisrunden ebenen Wand erstreckt und auf einander gegenüberliegende Seiten der Antriebswelle (16) vorragt, einen Mischschaufelaufbau (20), welcher an gegenüberliegenden freien Enden des Stützträgers benachbart der kreisrunden ebenen Wand (13) befestigt ist, wobei die kreisrunde ebene Wand ein einstellbares und versetzbares Ausgabetor (21) aufweist, welches über einem Ausgabefördermittel (22) angeordnet ist, um steuerbar die Menge eines Hauptfutterprodukts (40) auf das Fördermittel (22) durch den drehenden Versatz des Mischschaufelaufbaus (20) auszustoßen, wobei der Mischschaufelaufbau (20) eine Abziehklinge (25) umfasst, welche einen geraden Abschnitt (26) und einen nach vorne abgewinkelten Klingenabschnitt (27) aufweist, wobei jeder auf einer jeweiligen Seite des freien Endes des Stützträgers (19) angeordnet ist, **dadurch gekennzeichnet, dass** ein Mischarm (30) hinter der Abziehklinge vorragt und einen vorbestimmten Abstand von der kreisrunden ebenen Wand (13) beabstandet ist, um das Hauptfutterprodukt zu mischen und sein Zusammenklumpen zu verhindern, wobei die Misch- und Verteilungsvorrichtung zwei oder mehrere Vorratsbehälter (35) zum Speichern von Futterzusatzstoffen umfasst, wobei jeder der Behälter (35) Ausstoßmittel (36) aufweist, um ausgewählte Futterzusatzstoffe von oberhalb des Ausstoßfördermittels zum Zumischen mit dem Hauptfutterprodukt (40) zuzuführen.

2. Nutztierfuttermisch- und Nutztierfutterverteilungsvorrichtung gemäß Anspruch 1, wobei das Hauptfutterprodukt (40) Heu mit langen und kurzen Fasern ist.

3. Nutztierfuttermisch- und Nutztierfutterverteilungsvorrichtung gemäß Anspruch 1, wobei es zwei Stützträger (19, 19') gibt, welche an der Antriebswelle (16) befestigt sind und sich in rechten Winkeln zu einander erstrecken.

4. Nutztierfuttermisch- und Nutztierfutterverteilungsvorrichtung gemäß Anspruch 1, wobei des Weiteren ein Sicherheitssensorschrankenelement (50) vorgesehen ist, welches benachbart an der Ladeöffnung (15) befestigt ist, um das Gewicht des Hauptfutterprodukts (40), das in die Mischtrommel geladen wird, oder um jede darüber hinausgehende Ladung, welche darauf angeordnet wird, und um das Rotationsantriebsmittel (18) außer Betrieb zu setzen, wenn es einen vorbestimmten Abstand versetzt wird.

5. Nutztierfuttermisch- und Nutztierfutterverteilungsvorrichtung gemäß Anspruch 3, wobei die Abziehklinge (25) eine einstellbare Klinge ist, welche an einem Klingentragerahmen befestigt ist, wobei der Mischarm (30) Verbindungsmittel (30') aufweist, welche an der Abziehklinge befestigt sind.

6. Nutztierfuttermisch- und Nutztierfutterverteilungsvorrichtung gemäß Anspruch 1, wobei die Vorrichtung auf den versetzbaren Tragemitteln (46, 46') zum Versetzen zu gleichen, benachbarten Fütterungsbereichen von Nutztierstallboxen angebracht ist.

7. Nutztierfuttermisch- und Nutztierfutterverteilungsvorrichtung gemäß Anspruch 3, wobei die Stützträger (19, 19') einstellbare Träger sind, um ihre Länge zu verändern, um den Mischschaufelaufbau (20) mit einem beabsichtigten Abstand von der kreisrunden ebenen Wand (13) zu positionieren, wobei die Träger einen rechteckigen Querschnitt aufweisen und mit einem Winkel von 45° ausgerichtet sind, so dass ein Scheitelpunkt (49) einer Ecke des Trägers (19, 19') der Richtung seines Versatzes zugewandt ist, um beim Mischen des Hauptfutterprodukts unterstützend zu wirken.

## Revendications

1. Appareil de mélange et de distribution d'aliments pour bétail (10), comprenant un tambour de mélange (12) ayant une paroi circulaire plate (13) et des parois verticales plates opposées (14), une ouverture de chargement (15) dans une section d'extrémité supérieure dudit tambour de mélange, un arbre d'entraînement (16) supporté entre lesdites parois verticales plates opposées sur un axe central (17) de ladite paroi circulaire plate, des moyens d'entraînement en rotation (18) couplés audit arbre d'entraînement, une poutre (19, 19') de support de lames de mélange fixée audit arbre d'entraînement, s'étendant le long d'un axe diamétral de ladite paroi circulaire plate et faisant saillie sur les côtés opposés dudit arbre d'entraînement (16), un assemblage de lames de mélange (20) fixé aux extrémités libres opposées de ladite poutre de support adjacent à ladite paroi circulaire plate (13), ladite paroi circulaire plate ayant une porte de décharge ajustable et déplaçable (21) située au-dessus de moyens de transport de décharge (22) pour décharger de manière contrôlée la quantité d'un produit alimentaire principal (40) sur lesdits moyens de transport (22) par le déplacement en rotation dudit assemblage de lames de mélange (20),
ledit assemblage de lames de mélange (20) comprenant une lame de raclage (25) ayant une section de lame droite (26) et une section de lame (27) formant un angle vers l'avant, chacune étant disposée sur un côté respectif de l'extrémité libre du faisceau de support (19),
**caractérisé en ce que**
un bras de mélange (30) fait saillie vers l'arrière de ladite lame de raclage et est espacée d'une distance prédéterminée de ladite paroi circulaire plate (13) pour mélanger et empêcher le compactage dudit produit d'alimentation principal,
ledit appareil de mélange et de distribution comprenant deux compartiments de stockage (35) ou plus pour stocker des suppléments d'aliments, chacun desdits compartiments (35) ayant des moyens de décharge (36) pour acheminer des suppléments d'aliments choisis de dessus lesdits moyens de transport de décharge pour mélange avec ledit produit d'alimentation principal (40).

2. Appareil de mélange et de distribution d'aliments pour bétail selon la revendication 1, dans lequel ledit produit d'alimentation principal (40) est du foin à fibres longues et courtes.

3. Appareil de mélange et de distribution d'aliments pour bétail selon la revendication 1, dans lequel deux desdites poutres de support (19, 19') sont fixées audit arbre d'entraînement (16) et s'étendent à angles droits l'une avec l'autre.

4. Appareil de mélange et de distribution d'aliments pour bétail selon la revendication 1, dans lequel il est en outre prévu une porte de capteur de sécurité (50) fixée de manière adjacente à ladite ouverture de chargement (15) pour capter le poids dudit produit d'alimentation principal (40) chargé dans ledit tambour de mélange ou toute charge en excès placée dessus et pour désactiver lesdits moyens d'entraînement en rotation (18) lorsqu'ils sont déplacés d'une distance prédéterminée.

5. Appareil de mélange et de distribution d'aliments pour bétail selon la revendication 3, dans lequel la lame de raclage (25) est une lame ajustable fixée à un cadre de support de lame, ledit bras de mélange (30) ayant des moyens de raccordement (30') fixés à ladite lame de raclage.

6. Appareil de mélange et de distribution d'aliments pour bétail selon la revendication 1, dans lequel ledit appareil est monté sur des moyens de support déplaçables (46, 46') pour déplacer les mêmes zones d'alimentation adjacentes des stalles de bétail.

7. Appareil de mélange et de distribution d'aliments pour bétail selon la revendication 3, dans lequel lesdites poutres de support (19, 19') sont des poutres ajustables pour modifier leur longueur afin de positionner ledit assemblage de lames de mélange (20) dans un espacement souhaité de ladite paroi circulaire plate (13), lesdites poutres ayant une section transversale rectangulaire et étant orientées selon un angle de 45° de sorte qu'un sommet (49) d'un coin de ladite poutre (19, 19') soit tourné vers son sens de déplacement pour favoriser le mélange dudit produit d'alimentation principal.
